# EUROPÄISCHE PATENTSCHRIFT

(11) **EP 4 126 761 B1**
(45) Veröffentlichungstag und Bekanntmachung des Hinweises auf die Patenterteilung: **31.12.2025**
(21) Anmeldenummer: 21713001.2
(22) Anmeldetag: 17.03.2021
(51) Int. Cl.: C01B 21/26, C01B 21/28, C01B 21/40, B01D 53/56, B01D 53/78

(54) **VERFAHREN UND PRODUKTIONSANLAGE ZUM HERSTELLEN VON SALPETERSÄURE**
METHOD AND PRODUCTION PLANT FOR PRODUCING NITRIC ACID
PROCÉDÉ ET UNITÉ DE PRODUCTION POUR PRODUIRE DE L'ACIDE NITRIQUE

(30) Priorität: 27.03.2020 DE 102020002008
(43) Veröffentlichungstag der Anmeldung: 08.02.2023
(73) Patentinhaber: Messer SE & Co. KGaA, 65812 Bad Soden (DE)
(72) Erfinder: ROHOVEC, Joachim, 2544 Leobersdorf (AT); VAN GELLECOM, Nina, 40822 Mettmann (DE)
(86) Internationale Anmeldenummer: PCT/EP2021/056873
(87) Internationale Veröffentlichungsnummer: WO 2021/191031

(56) Entgegenhaltungen:
- WO-A1-2019/036771
- WO-A2-2013/028668
- DE-A1- 102014 006 017
- US-A- 5 206 002

## Beschreibung

Die vorliegende Erfindung betrifft ein Verfahren zum Herstellen von Salpetersäure nach dem Oberbegriff des Patentanspruchs 1. Die Erfindung betrifft ferner eine Produktionsanlage zum Herstellen von Salpetersäure nach dem Oberbegriff des Patenanspruchs 7.

Die Erfindung betrifft somit ein Verfahren bzw. eine Anlage zur technischen Herstellung von Salpetersäure, bei dem bzw. in der ein mehrstufiges katalytisches Ammoniakoxidationsverfahren (Ostwald-Verfahren) zum Einsatz kommt. Im ersten Schritt wird dabei Ammoniak und Sauerstoff in einem Reaktor (im Folgenden auch "Ammoniakverbrennungseinrichtung" genannt) an einem meist aus Edelmetallen, beispielsweise Platin-Rhodium, bestehenden Netzkatalysator, zu Stickstoffmonoxid und Wasserdampf umgesetzt:

(1) 4 NH₃ + 5 O₂ ⇆ 4 NO + 6 H₂O

Diese Reaktion wird bei hohen Temperaturen, beispielweise 900 °C, durchgeführt. Im Allgemeinen arbeitet man mit einer überstöchiometrischen Menge an Luft bzw. Sauerstoff, um zu verhindern, dass sich ein explosionsfähiges Gemisch bildet und um zusätzlichen Sauerstoff für nachfolgende Oxidationsreaktionen bereitzustellen. Anschließend wird der Reaktoraustrag in einem Kondensator auf eine Temperatur abgekühlt, in der ein Teil der im Prozessgasstrom enthaltenen Komponenten auskondensiert. Dabei reagiert ein Teil des Stickstoffmonoxids mit Wasser und Sauerstoff unter Bildung einer wässerigen Salpetersäure enthaltenden Lösung, die im Übrigen auch Stickoxide, insbesondere Stickstoffmonoxid enthält. Das verbleibende, nicht in Lösung gehende Gasgemisch wird einem Absorptionsturm (Kolonne) zugeführt, in welchem ein Teil des gasförmigen Stickstoffmonoxids mit Sauerstoff, der in Form von Luftsauerstoff oder in Form von reinem Sauerstoff bereitgestellt wird, zu Stickstoffdioxid bzw. dessen Dimer Distickstofftetraoxid oxidiert wird, welche anschließend mit Wasser zu Salpetersäure umgesetzt werden:

(2) 2 NO + O₂ ⇆ 2 NO₂ ⇆ N₂O₄

(3) 3 NO₂ + H₂O % 2 HNO₃ + NO

(4) N₂O₄ + H₂O % HNO₃ + HNO₂

(5) 2 HNO₂ ⇆ HNO₃ + 2 NO + H₂O

(6) 2 N₂O₄ + O₂ + 2 H₂O ⇆ 4 HNO₃

Das Wasser bzw. die sich bildende Salpetersäure enthaltende Lösung (Schwachsäure) durchläuft dabei den Absorptionsturm üblicherweise im Gegenstrom zum aufsteigenden Gasstrom. Die flüssige Phase, welche sich zuvor im Kondensator gebildet hat, wird üblicherweise auf einem der unteren Böden der Kolonne zugeführt. Die Salpetersäure sammelt sich am Boden des Absorptionsturms in einer wässrigen Lösung an. Diese Salpetersäure wird zum Kopf der Bleichkolonne geführt und dort aufgegeben. Im Gegenstrom dazu wird in der Bleichkolonne Luft zugeführt, um die noch in der Lösung enthaltenen nitrosen Gase auszutreiben. In vielen Fällen werden auch mehrere Absorptionstürme hintereinander geschaltet, wobei die Reihe der Absorptionstürme vom Gasstrom bzw. der Salpetersäure im Gegenstrom durchlaufen wird. Um die Löslichkeit der nitrosen Gase zu erhöhen, wird der Absorptionsturm bzw. werden die Absorptionstürme bei einem höheren Druck von 1 bis 15 bar(g) betrieben. Bei Anlagen, deren Absorptionstürme auf einem vergleichsweise niedrigen Druck von 1 bis 5 bar(g) arbeiten (Nieder- und Mitteldruckanlagen), ist der Anteil nitroser Abgase im Abgas verhältnismäßig hoch. Das Anlegen höherer Drücke führt zwar zu einer Verringerung des Restgehaltes an Stickoxiden im Abgas, ist jedoch mit erheblichen Mehrkosten für die Kompression und die entsprechend für höhere Drücke geeignete Auslegung der Anlagenkomponenten verbunden.

Um die Effizienz dieses Verfahrens zu steigern wurde bereits versucht, durch Einleitung zusätzlichen Sauerstoffs an verschiedenen Stellen den Sauerstoffpartialdruck zu erhöhen, die Umsetzung in Richtung der Produkte zu fördern und somit den Anteil nitroser Gase im Abgas zu reduzieren. So wird beispielsweise in der EP 0 799 794 A1, der EP 1 013 604 B1 oder der EP 2 953 894 A1 vorgeschlagen, durch Zuführen von Sauerstoff oder eines mit Sauerstoff angereicherten Gases in den oben skizzierten Prozess zur Salpetersäureproduktion die Effizienz des Prozesses zu steigern, die Qualität der produzierten Salpetersäure zu verbessern oder die Entstehung unerwünschter NOₓ-Gase zu verringern. In der DE 10 2014 006 017 A1 wird vorgeschlagen, im Kopfbereich eines Absorptionsturms durch Zuführen von Sauerstoff eine sauerstoffreiche Atmosphäre auszubilden, in die über einer Sprühdüse Salpetersäure enthaltende Lösung eingesprüht wird.

Es ist auch bereits bekannt, Ozon in der Salpetersäureproduktion einzusetzen. So wird beispielsweise in der WO 2019/036771 A1, der US 5 206 002 A und der US 6 231 824 B1 vorgeschlagen, Ozon zur Oxidation von NOₓ in den Abgasen einer Salpetersäureproduktionsanlage einzusetzen. Die WO 2013/028 668 A2 beschreibt ein Verfahren zur Entfernung nitroser Komponenten aus roher Salpetersäure, um NOₓ-Anteile im Abgas zu verringern. Das Verfahren beinhaltet einen Verfahrensschritt, bei der gasförmiges Ozon unmittelbar in den Absorptionsturm einer Produktionsanlage für Salpetersäure eingeleitet wird. In den Räumen zwischen den Böden des Absorptionsturms sollen dort anwesende Stickoxide mit dem Ozon zu N₂O₅ reagieren, das anschließend mit Wasser zu Salpetersäure umgesetzt wird.

Trotz derartiger Verbesserungen ist es möglich, eine weitere Effizienzsteigerung und Prozessoptimierung des eingangs beschriebenen Verfahrens zur Salpetersäureproduktion zu erreichen, was zugleich Aufgabe der vorliegenden Erfindung ist.

Gelöst ist diese Aufgabe durch ein Verfahren mit den Merkmalen des Patentanspruchs 1 sowie durch eine Produktionsanlage zur Herstellung von Salpetersäure mit den Merkmalen des Patentanspruchs 7. Vorteilhafte Ausgestaltungen der Erfindung werden in den Unteransprüchen angegeben.

Das erfindungsgemäße Verfahren zum Herstellen von Salpetersäure ist also dadurch gekennzeichnet, dass in die durch eine Verbindungsleitung zwischen Kondensator und erstem Absorptionsturm geführte wässerige, Salpetersäure enthaltende Lösung, die bei der Kondensation der Reaktionsprodukte der Ammoniakverbrennung im Kondensator entsteht, Ozon eingeleitet wird. Die Einleitung des Ozons erfolgt insbesondere durch Zuführen eines ozonhaltigen Gases, insbesondere eines Ozon-Sauerstoff-Gemisches. Das Ozon löst sich zumindest teilweise in der Salpetersäure enthaltenden Lösung und gelangt zusammen mit dieser in den Absorptionsturm.

Die Erfindung geht von dem Grundgedanken aus, dass in der Salpetersäure enthaltenden Lösung aus dem Kondensator auch Stickoxide (im wesentlichen Stickstoffmonoxid) sowie salpetrige Säure enthalten sind, die durch die Reaktion mit Ozon oxidiert werden.

(7) 2 NO₂ + O₃ ⇆ NO₂ + O₂

(8) 2 NO + 3 O₃ + H₂O ⇆ 2 HNO₃ + 3 O₂

(9) 2 NO₂ + O₃ + H₂O ⇆ 2 HNO₃ + O₂

(10) HNO₂ + O₃ ⇆ HNO₃ + O₂

Die erfindungsgemäße Einleitung von Ozon bereits in die vom Kondensator zum Absorptionsturm führende Verbindungsleitung führt aufgrund der hohen Konzentration der aufzuoxidierenden Stoffe sowie der verhältnismäßig langen Verweilzeit des Ozons in der Lösung zu einer erheblichen Reduzierung von NOₓ-Bestandteilen im Abgas. Darüber hinaus kann zusätzlich in andere Abschnitten des Produktionsprozesses Ozon und/oder Sauerstoff zugeführt werden, um die NOₓ-Konzentration noch weiter zu senken und die Effizienz des Prozesses zu steigern.

Das Ozon wird bevorzugt vor Ort in einem Ozonisator aus Sauerstoff erzeugt und direkt, ggf. zusammen mit noch vorhandenem Sauerstoff, mit mindestens dem für die Einleitung erforderlichen Druck, zugeführt. Darüber hinaus ist es vorteilhaft, das Ozon mit einer möglichst niedrigen Temperatur von bevorzugt unter 10°C, besonders bevorzugt von unter 0°C in die durch die Verbindungsleitung geführte Salpetersäure enthaltende Lösung einzubringen.

Das Verfahren umfasst insbesondere solche Anwendungsfälle, bei denen nur ein Absorptionsturm vorhanden ist, in denen der "erste Absorptionsturm" also der einzige Absorptionsturm der Produktionsanlage ist. Die Erfindung ist jedoch keineswegs auf solche Anwendungsfälle beschränkt; vielmehr kann auch eine Anordnung aus mehreren Absorptionstürmen zum Einsatz kommen. Dabei durchströmt in an sich bekannter Weise das stickoxidhaltige Prozessgasgemisch den ersten Absorptionsturm und wird wenigstens einem zweiten Absorptionsturm zugeführt und dort mit Wasser oder Schwachsäure im Gegenstrom in Kontakt gebracht. Dabei reagiert das stickoxidhaltige Gasgemisch zumindest teilweise unter Bildung einer wässerigen, Salpetersäure enthaltenden Lösung, bzw. Schwachsäure, die sich am Boden des zweiten Absorptionsturms ansammelt und von dort mittels einer Fördereinrichtung über eine Steigleitung einem oberen Bereich des ersten Absorptionsturms zugeführt wird. In einer bevorzugten Ausführungsform der Erfindung wird auch in diese Steigleitung Ozon oder Sauerstoff eingeleitet, um die in der Schwachsäure gelösten Stoffe mit Oxidationsmittel zur Reaktion zu bringen.

Ebenso sind Ausgestaltungen denkbar, in denen vom Boden des ersten Absorptionsturms Salpetersäure enthaltende Lösung entnommen wird, um über eine Förderleitung in die Bleichkolonne und/oder in einen relativ zum Boden höheren Abschnitt des ersten Absorptionsturms gefördert zu werden. Eine abermals vorteilhafte Ausgestaltung der Erfindung sieht vor, auch in die durch diese Förderleitung/en geführte Salpetersäure enthaltene Lösung Ozon und/oder Sauerstoff einzuleiten.

Als "Sauerstoff" kommt in den vorgenannten Fällen bevorzugt Sauerstoff mit einer Reinheit von wenigstens 95 Vol.-% zum Einsatz, jedoch kann der Sauerstoff auch in Form von Luft oder als sonstiges, Sauerstoff enthaltendes Gasgemisch zugeführt werden. Der Sauerstoff wird der Salpetersäure enthaltenden Lösung in Gasform oder aber in tiefkalt verflüssigter Form zugeführt, wobei zumindest im letztgenannten Fall darauf zu achten ist, dass die Strömungswege durch die Zuführung des tiefkalten Mediums nicht vereisen. Alternativ kann flüssiger Sauerstoff vor seiner Zuführung an die Salpetersäure enthaltende Lösung verdampft werden. Dies kann in einem üblichen Luftverdampfer erfolgen, oder der Kälteinhalt des flüssigen Sauerstoffs wird anderweitig genutzt, beispielsweise zur vorgenannten Kühlung der Reaktionsprodukte der Ammoniakverbrennung.

Da ein höherer Druck die Einlösung des Ozons und die Reaktion insgesamt begünstigt, wird das Ozon bevorzugt an einem Punkt in das System eingespeist, an dem ein gegenüber dem Druck in der Kolonne höherer Druck herrscht. Hierzu bietet sich insbesondere ein geodätisch unterer Abschnitt einer Steigleitung, bevorzugt stromab zu einer vorhandenen Fördereinrichtung, an, da hier schon aufgrund des hydrostatischen Drucks ein vergleichsweise hoher Druck herrscht.

Alternativ oder ergänzend dazu ist es vorteilhaft, dass von dem durch die jeweilige Leitung geführten Hauptstrom der Salpetersäure enthaltende Lösung ein Teilstrom abgezweigt, in einer Bypassleitung auf einen höheren Druck, als es dem Druck in der Leitung entspricht, verdichtet und mit Ozon und/oder Sauerstoff angereichert wird. Der angereicherte Teilstrom wird anschließend in den Hauptstrom zurückgeführt oder direkt in den Absorptionsturm bzw. in die Bleichkolonne eingespeist. Beispielsweise wird der Druck des Teilstroms in der Bypassleitung auf einen Wert von 5 bis 15 bar verdichtet, wodurch sich das Ozon noch leichter löst. Im Rahmen der Erfindung vorstellbar ist im Übrigen auch, chargenweise Salpetersäure enthaltende Lösung dem Kondensator oder einem Absorptionsturm zu entnehmen und mit Ozon unter entsprechend hohen Drücken in Druckbehältern zu behandeln.

Die Aufgabe der Erfindung wird auch durch eine Produktionsanlage mit den Merkmalen des Patentanspruchs 7 gelöst.

Eine erfindungsgemäße Produktionsanlage zum Herstellen von Salpetersäure umfasst eine Ammoniakverbrennungsanlage zum Umsetzen von Ammoniak mit Sauerstoff zu Stickoxiden und Wasserdampf, einen mit der Ammoniakverbrennungsanlage verbundenen Kondensator zum Abkühlen der Reaktionsprodukte aus der Ammoniakverbrennungsanlage, wobei wenigstens ein Teil der Reaktionsprodukte kondensiert, einen stromab zum Kondensator angeordneten ersten Absorptionsturm zum Waschen des im Kondensator entstehenden Gasgemisches mit Wasser oder einer wässerigen Lösung, wenigstens eine Verbindungsleitung zum Zuführen einer Salpetersäure enthaltenden Lösung aus dem Kondensator in den ersten Absorptionsturm, eine den ersten Absorptionsturm mit einer Bleichkolonne verbindende Förderleitung zum Fördern von Rohsäure, sowie eine an eine Quelle für Ozon angeschlossene Ozonzuleitung, die mit der zwischen Kondensator und erstem Absorptionsturm verlaufenden Verbindungsleitung strömungsverbunden ist.

Bei einer vorteilhaften Variante der Erfindung zweigt von der zuletzt genannten Verbindungsleitung eine Bypassleitung ab, in die die Ozonzuleitung einmündet und die vor der Einmündung der Verbindungsleitung in den Absorptionsturm in diese zurückführt oder separat von dieser in den Absorptionsturm einmündet.

Die Ozonzuleitung mündet an einer Eintragseinrichtung, beispielsweise einer Eintragslanze oder eine Venturidüse, in die Verbindungsleitung oder die Bypassleitung ein und ermöglicht so eine effiziente Zuführung eines Ozon enthaltenden Gasgemisches in die Salpetersäure enthaltende Lösung. Das Eintragssystem ist bevorzugt dazu geeignet, das eingetragene Ozon und die Salpetersäure enthaltende Lösung schnell und innig miteinander zu vermischen.

Sofern es sich bei der Verbindungsleitung um eine Steigleitung handelt, ist das Eintragseinrichtung bevorzugt in einem - geodätisch gesehen - unteren Bereich der Verbindungsleitung angeordnet; besonders bevorzugt befindet es sich etwa in Höhe des Bodens des ersten Absorptionsturms. Diese Ausgestaltung hat insbesondere den Vorteil, dass der hydrostatische Druck der in der Verbindungsleitung vorliegenden Flüssigkeitssäule das Einlösen des Ozons begünstigt. Weiterhin ist es zweckmäßig, den Eintrag des Ozons möglichst nahe am Beginn (in Strömungsrichtung der Lösung gesehen) der Leitung vorzunehmen, da so der gesamte sich an die Eintragseinrichtung anschließende Abschnitt der Verbindungsleitung und/oder der Bypassleitung als Reaktor zur Durchführung der oben genannten Reaktion (6) zur Erzeugung von Salpetersäure genutzt wird. Daher ist es besonders vorteilhaft, wenn zusätzlich Mittel zum Erhöhen der Kontaktzeit vorgesehen sind, beispielsweise ein vergrößerter Strömungsquerschnitt der Leitung oder eine verlängerte Leitung.

In einer abermals vorteilhaften Ausgestaltung der Erfindung sind in der Verbindungsleitung und/oder der Bypassleitung Mittel vorgesehen, die einen möglichst hohen Druck der Salpetersäure enthaltenden Lösung innerhalb des Bereiches der Leitung, in den die Ozonzuführung einmündet, zu gewährleisten. Beispielsweise handelt es sich dabei um einen stromauf zur Einmündung der Ozonzuleitung angeordneten Verdichter und einen stromab zur Einmündung der Ozonzuleitung angeordneten Druckreduzierer, mittels denen in der Verbindungsleitung bzw. in der Bypassleitung ein Druck erzeugt wird, der zumindest höher als der hydrostatische Druck in der Leitung ist und beispielsweise 10-15 bar(g) beträgt.

Im Falle einer Produktionsanlage, die mehr als einen Absorptionsturm aufweist, also bei der dem ersten Absorptionsturm wenigstens ein zweiter Absorptionsturm oder mehrere zweite Absorptionstürme nachgeschaltet ist/sind und eine Steigleitung oder mehrere Steigleitungen vorhanden ist/sind, die vom Boden des zweiten bzw. nachfolgenden Absorptionsturms zum Kopfraum des ersten Absorptionsturms bzw. eines vorgeschalteten zweiten Absorptionsturms führt/führen, sieht eine bevorzugte Ausgestaltung der Erfindung vor, dass in diese Steigleitung/en, oder zumindest in einer oder einigen von diesen Steigleitungen, eine mit einer Quelle für Ozon und/oder Sauerstoff strömungsverbundene Zuleitung einmündet, und zwar bevorzugt stromab zu einer in dieser Steigleitung/en angeordneten Fördereinrichtung, falls vorhanden.

Eine ebenfalls vorteilhafte Ausgestaltung der Erfindung sieht vor, dass in einer gegebenenfalls vorhandenen, vom Sumpf des ersten oder eines weiteren Absorptionsturms in einen höheren Bereich des selben Absorptionsturms führenden Steigleitung eine mit einer Quelle für Ozon und/oder Sauerstoff strömungsverbundene Zuleitung einmündet, und zwar bevorzugt stromab zu einer in dieser Steigleitung angeordneten Fördereinrichtung.

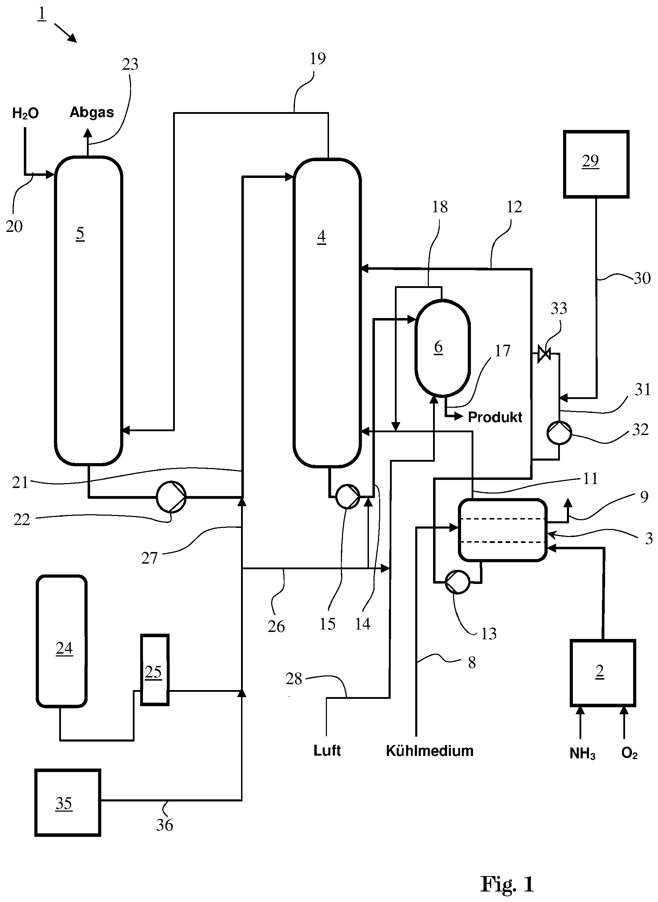

Anhand der Zeichnung soll ein Ausführungsbeispiel der Erfindung näher erläutert werden. Die einzige Zeichnung (Fig. 1) zeigt schematisch den Schaltplan einer erfindungsgemäßen Produktionsanlage zum Herstellen von Salpetersäure.

Die in Fig. 1 gezeigte Produktionsanlage 1 zur Herstellung von Salpetersäure umfasst in an sich bekannter Weise eine Ammoniakverbrennungsanlage 2, einen Kondensator 3, mehrere, im Ausführungsbeispiel zwei, Absorptionstürme 4, 5 und eine Bleichkolonne 6. Bei den Absorptionstürmen 4, 5 handelt es sich im Ausführungsbeispiel um Nieder- und Mitteldruck-Kolonnen, die bei einem Betriebsdruck von 2 bis 5 bar(g) arbeiten; jedoch können auch Mitteldruck- oder Hochdruckkolonnen mit einem Betriebsdruck von bis zu 15 bar(g) zum Einsatz kommen.

Die Ammoniak-Verbrennungsanlage 2 dient dazu, gasförmigen Ammoniak und Sauerstoff in bei einer Temperatur zwischen 600°C und 900°C an einem Netzkatalysator aus einem Edelmetall, wie beispielsweise Platin oder einer Legierung aus Platin/Rhodium, zu Stickstoffmonoxid und Wasserdampf umzusetzen. Als Sauerstoff wird dabei üblicherweise Luftsauerstoff eingesetzt. Die Reaktionsprodukte der in der Ammoniak-Verbrennungsanlage 2 ablaufenden Reaktion, im Wesentlichen Stickstoffmonoxid und Wasserdampf, sowie überschüssiger Sauerstoff, werden dem Kondensator 3 zugeführt, in dem die Reaktionsprodukte durch indirekten thermischen Kontakt mit einem über eine Kühlmediumszuleitung 8 herangeführten Kühlmedium, beispielsweise Wasser oder verflüssigter oder kalter gasförmiger Stickstoff, auf eine Temperatur abgekühlt werden, bei der mindestens ein Teil des Wasserdampfs kondensiert, beispielsweise auf 60°C bis 80°C. Das beim Wärmetausch erwärmte Kühlmedium wird über eine Kühlmediumsausleitung 9 abgeführt und in die Atmosphäre entlassen oder einer anderweitigen Verwendung zugeführt. Ein Teil der Stickoxide reagiert mit dem Wasser zu Salpetersäure, die sich am Boden des Kondensators 3 in einer wässerigen Lösung abscheidet. Das im Kondensator 3 vorhandene Gasgemisch wird als Prozessgas über eine Gaszuleitung 11 in einen unteren Bereich des Absorptionsturms 4 eingeleitet. Ein Teil des Stickstoffmonoxids wird mit überschüssigem Sauerstoff zu Stickstoffdioxid bzw. zu dessen Dimer Distickstofftetraoxid oxidiert. Die wässerige, Salpetersäure enthaltende Lösung aus dem Boden des Kondensators 3 wird über eine Verbindungsleitung 12 einem gegenüber der Einmündung der Gaszuleitung 11 höheren Bereich des Absorptionsturms 4 zugeführt. Sofern es sich bei der Verbindungsleitung 12 um eine Steigleitung handelt, sorgt eine Fördereinrichtung 13 für den notwendigen Druck zur Überwindung des hydrostatischen Drucks.

Die wässerige, Salpetersäure enthaltende Lösung aus dem Kondensator 3 wird mittels einer hier nicht näher erläuterten Düsenanordnung in den Absorptionsturm 4 eingesprüht, sinkt nach unten und kommt dabei mit dem von unten aufsteigenden, stickoxidhaltigen Prozessgasen in Kontakt. Dabei reagieren weitere Anteile der im Gasgemisch enthaltenen Stickoxide zu Salpetersäure, die sich in einer wässerigen Lösung im Sumpf des Absorptionsturms 4 ansammelt. Diese wässerige, Salpetersäure enthaltende Lösung wird über eine Leitung 14 abgeführt, mittels einer Fördereinrichtung 15 zur Bleichkolonne 6 transportiert und dort eingesprüht. In der Bleichkolonne 6 fällt wiederum stickoxidhaltiges Gas an, das über eine Leitung 18 in die Gaszuleitung 11 und über diese in den Absorptionsturm 4 eingeleitet wird. Über Leitung 17 wird das Produkt, die gebleichte Säure, ausgeleitet.

Das im Absorptionsturm 4 verbliebene, stickoxidhaltige Gasgemisch wird über eine Prozessgasleitung 19 abgeführt und in einen unteren Bereich des Absorptionsturms 5 eingeleitet. In den Kopfraum des Absorptionsturms 5 wird zugleich Wasser aus einer Wasserzuleitung 20 eingesprüht. Das von unten aufsteigende, stickoxidhaltige Gasgemisch kommt im Absorptionsturm 5 mit dem eingesprühten Wasser in Kontakt und reagiert zumindest teilweise mit diesem zu Salpetersäure, die sich am Boden des Absorptionsturms 5 in einer wässerigen Lösung ansammelt. Diese wässerige, Salpetersäure enthaltende Lösung wird über eine Steigleitung 21 abgeführt und mittels einer Fördereinrichtung 22 zum Kopfraum des Absorptionsturms 4 geführt, dort eingesprüht, und durchläuft den Absorptionsturm 4 im Gegenstrom zum Prozessgasstrom, wobei sich immer stärker konzentrierte Salpetersäure bildet.

Im Absorptionsturm 5 noch vorhandenes Gasgemisch wird über eine Abgasleitung 23 abgeleitet und einer hier nicht gezeigten Einrichtung zur Entstickung zugeführt, in der die verbliebenen Stickoxide weitestgehend aus dem Gasgemisch entfernt werden.

Aus Gründen der Übersichtlichkeit umfasst das in Fig. 1 gezeigte Ausführungsbeispiel nur zwei Absorptionstürme 4, 5; es sind im Rahmen der Erfindung selbstverständlich auch Ausführungsbeispiele mit drei oder mehr Absorptionstürmen denkbar, die von den stickoxidhaltigen Gasströmen und den wässerigen, Salpetersäure enthaltenden Lösungen in bekannter Weise im Gegenstrom durchlaufen werden.

Um die Oxidation der nitrosen Gase und der salpetrigen Säure zu intensivieren, wird dem Prozess Ozon zugeführt. Das Ozon wird einer Quelle für Ozon entnommen, bei der es sich im Ausführungsbeispiel um einen Ozonisator 29 handelt, in dem das Ozon vor Ort aus Sauerstoff hergestellt wird. Das Ozon aus dem Ozonisator 29 wird, zusammen mit noch vorhandenem Sauerstoff, über eine Ozonzuleitung 30 in eine Bypassleitung 31 eingespeist, die von der Verbindungsleitung 12 abgeht und stromab zur Einmündung der Ozonzuleitung 30 wieder in diese einmündet. Um im Bereich der Einmündung der Ozonzuleitung 30 einen möglichst hohen Druck erzielen zu können, ist in der Bypassleitung 31 stromauf dazu ein Verdichter 32 und stromab dazu ein Druckminderer 33 angeordnet, der den Druck wieder auf den in der Verbindungsleitung 12 herrschenden Druck reduziert. Auf diese Weise kann in der Bypassleitung 31 im Bereich der Einmündung der Ozonzuleitung 30 ein Druck von 10 bar(g) bis 15 bar(g) oder noch darüber realisiert werden, der das Einlösen des Ozons in die Salpetersäure enthaltende Lösung begünstigt. Alternativ dazu kann die Bypassleitung 31 auch direkt in den Absorptionsturm 4 einmünden.

Zusätzlich wird im hier gezeigten Ausführungsbeispiel Sauerstoff aus einer Sauerstoffquelle, beispielsweise einem Tank 24 entnommen und in den Prozess eingebracht. Dazu durchläuft der Sauerstoff in an sich bekannter Weise einen Luftverdampfer 25 und wird kalt, jedoch in Gasform, über Sauerstoffzuleitungen 26, 27 der Leitung 14 und/oder der Steigleitung 21 und/oder einer zur Bleichkolonne 6 führende Luftzuleitung 28 zugeführt. Anstelle der Vergasung in einem Luftverdampfer 25 kann der Kälteinhalt des verflüssigten Sauerstoffs im Übrigen auch zur Kühlung der Reaktionsprodukte aus der Ammoniak-Verbrennungsanlage 2 im Kondensator 3 herangezogen werden, indem beispielsweise das dort eingesetzte Kühlmedium einen Wärmetausch mit dem flüssigen Sauerstoff aus dem Tank 24 unterzogen wird, oder der flüssige Sauerstoff aus Tank 24 wird direkt dem Kondensator 3 als Kältemedium zugeführt.

Der über die Sauerstoffzuleitung 26 in die Leitung 14 und/oder in die Luftzuleitung 28 geführte Sauerstoff unterstützt die Oxidation von in der Salpetersäure noch vorhandenen Stickoxiden bzw. der salpetrigen Säure. Im Kopfraum der Bleichkolonne 6 sammelt sich eine sauerstoffreiche Gasphase an, die über Leitung 18 abgezogen und mit dem durch die Gaszuleitung 11 geführten Gasgemisch aus dem Kondensator 3 vereinigt wird.

Anstelle von Sauerstoff kann im Übrigen dabei auch Ozon oder ein Ozonhaltiges Gasgemisch zum Einsatz kommen, das in einem Ozonisator 35 erzeugt und über eine Ozonzuleitung 36 in zumindest eine der Leitungen 14, 21, 28 eingespeist wird.

In der Steigleitung 21 sowie in den Leitungen 12, 14, sofern es sich bei diesen ebenfalls um Steigleitungen handelt, wird der Sauerstoff bzw. das Ozon oder das ozonhaltige Gasgemisch bevorzugt in einem geodätisch unteren Bereich und stromab zur jeweiligen Fördereinrichtung 13, 15, 22, 32 eingebracht, um den hydrostatischen Druck der in der Leitung 12, 14, 21 vorliegenden Flüssigkeitssäule und ggf. einen durch die jeweilige Fördereinrichtung 13, 15, 22, 32 erzeugten zusätzlichen Druck zu nutzen. Innerhalb des sich stromabwärts an den Eintragspunkt für den Sauerstoff bzw. das Ozon anschließenden Abschnitts der Leitungen 12, 14, 21 löst sich der Sauerstoff bzw. das Ozon teilweise und reagiert mit Stickoxiden, die in der Salpetersäure enthaltenden Lösung gelöst sind, und ggf. mit Wasser. Ein Teil des im Überschuss eingebrachten Sauerstoffs und ggf. zu Sauerstoff zerfallendes Ozon reagiert nicht mit den Stickoxiden und gelangt gasförmig in den jeweiligen Absorptionsturm 4, 5, wo er, bzw. es zu einem höheren Sauerstoffpartialdruck führt, der wiederum die Bildung von Salpetersäure im jeweiligen Absorptionsturm 4, 5 begünstigt. Die Bildung von Salpetersäure wird weiterhin durch die tiefe Temperatur des zugeführten Sauerstoffs bzw. Ozons unterstützt.

Die Erfindung ist insbesondere auch zur Nachrüstung in Altanlagen geeignet, die üblicherweise mit Absorptionstürmen arbeiten, deren Betriebsdruck im Nieder- und Mitteldruckbereich, also bei etwa 1 bis 5 bar(g), liegt. Die gegenständliche Erfindung ist jedoch ebenso für die Nachrüstung bei Hoch- und Dual-Druckanlagen einsetzbar. Hierbei könnte man sogar zu noch deutlich geringeren NOₓ - Konzentrationen im Abgas gelangen, wodurch die Betriebskosten von Entstickungsanlagen deutlich verringert oder deren Einsatz sogar gänzlich vermieden werden könnte. Dabei können wesentliche Kosteneinsparungen durch Einsparung von Ammoniak und/oder Erdgas resultieren, welche üblicherweise für die Entstickung als Reduktionsmittel eingesetzt werden.

### Bezugszeichenliste

- 1.: Produktionsanlage
- 2.: Ammoniak-Verbrennungsanlage
- 3.: Kondensator
- 4.: Absorptionsturm
- 5.: Absorptionsturm
- 6.: Bleichkolonne
- 7.: -
- 8.: Kühlmediumszuleitung
- 9.: Kühlmediumsausleitung
- 10.: -
- 11.: Gaszuleitung
- 12.: Verbindungsleitung
- 13.: Fördereinrichtung
- 14.: Leitung
- 15.: Fördereinrichtung
- 16.: -
- 17.: Produktausleitung
- 18.: Leitung
- 19.: Prozessgasleitung
- 20.: Wasserzuleitung
- 21.: Steigleitung
- 22.: Fördereinrichtung
- 23.: Abgasleitung
- 24.: Tank
- 25.: Luftverdampfer
- 26.: Sauerstoffleitung
- 27.: Sauerstoffleitung
- 28.: Luftzuleitung
- 29.: Ozonisator
- 30.: Ozonzuleitung
- 31.: Bypassleitung
- 32.: Verdichter
- 33.: Druckminderer
- 34.: -
- 35.: Ozonisator
- 36.: Ozonzuleitung

## Patentansprüche

1. Verfahren zum Herstellen von Salpetersäure, bei dem
a. in einer Ammoniakverbrennungsanlage (2) Ammoniak mit Sauerstoff zu Stickoxiden und Wasserdampf umgesetzt wird,
b. die Stickoxide und der Wasserdampf aus Schritt (a.) in einem Kondensator (3) auf eine Temperatur abgekühlt werden, bei dem mindestens ein Teil des Wasserdampfs kondensiert, wobei die Stickoxide teilweise mit dem kondensierten Wasserdampf und Sauerstoff zu einer wässerigen, Salpetersäure enthaltenden Lösung reagieren und teilweise in einem stickoxidhaltigen Gasgemisch verbleiben,
c. die Salpetersäure enthaltende Lösung aus Schritt (b.) aus dem Kondensator (3) über eine Verbindungsleitung (12) einem ersten Absorptionsturm (4) zugeführt wird,
d. das stickoxidhaltige Gasgemisch aus Schritt (b.) dem ersten Absorptionsturm (4) zugeführt wird, in welchem es mit Wasser oder einer wässerigen Lösung in Kontakt gebracht wird, wobei das stickoxidhaltige Gasgemisch mit Wasser zumindest teilweise unter Bildung einer wässerigen, Salpetersäure enthaltenden Lösung reagiert, die sich, zusammen mit der Salpetersäure enthaltenden Lösung aus Schritt (c.), am Boden des ersten Absorptionsturms (4) ansammelt,
**dadurch gekennzeichnet, dass**
e. in die durch die Verbindungsleitung (12) zwischen Kondensator (3) und erstem Absorptionsturm (4) geführte Salpetersäure enthaltende Lösung aus Schritt (b.) vor ihrer Zuführung an den ersten Absorptionsturm (4) Ozon eingeleitet wird.

2. Verfahren nach einem der vorhergehenden Ansprüche, **dadurch gekennzeichnet, dass** das stickoxidhaltige Gasgemisch, nachdem es den ersten Absorptionsturm (4) durchlaufen hat, einem zweiten Absorptionsturm (5) zugeführt wird, in dem es mit Wasser oder einer wässerigen Salpetersäure enthaltenden Lösung Salpetersäurelösung in Kontakt gebracht wird, wobei das stickoxidhaltige Gasgemisch zumindest teilweise unter Bildung einer Salpetersäure enthaltenden Lösung reagiert, die sich am Boden des zweiten Absorptionsturms (5) ansammelt und von dort über eine Steigleitung (21) einem oberen Bereich des ersten Absorptionsturms (4) zugeführt wird, wobei in die durch die Steigleitung (21) geführte Salpetersäure enthaltende Lösung Ozon und/oder Sauerstoff eingeleitet wird.

3. Verfahren nach einem der vorhergehenden Ansprüche, **dadurch gekennzeichnet, dass** Salpetersäure enthaltende Lösung vom Boden des ersten Absorptionsturms (4) abgeführt und über eine Förderleitung (14) einem oberen Bereich des ersten Absorptionsturms (4) und/oder einer Bleichkolonne (6) zugeführt wird, wobei in die durch die Verbindungsleitung (14) geführte Salpetersäure enthaltende Lösung Ozon und/oder Sauerstoff eingeleitet wird.

4. Verfahren nach einem der vorhergehenden Ansprüche, **dadurch gekennzeichnet, dass** die Verbindungsleitung (12) als Steigleitung ausgebildet ist und die Einleitung des Ozons und/oder des Sauerstoffs stromab zur einer in der Verbindungsleitung (12) angeordneten Fördereinrichtung (13) in einem geodätisch unteren Bereich der jeweiligen Leitung (12) erfolgt.

5. Verfahren nach einem der vorhergehenden Ansprüche, **dadurch gekennzeichnet, dass** von der durch die Steigleitung (12, 14, 21) geführten Salpetersäure enthaltenden Lösung ein Teilstrom abgezweigt, verdichtet und vor seiner Zuführung an den Absorptionsturm (4), bzw. der Bleichkolonne (6), mit Ozon und/oder Sauerstoff angereichert wird.

6. Verfahren nach einem der vorhergehenden Ansprüche, **dadurch gekennzeichnet, dass** das in die Salpetersäure enthaltenen Lösung in der Verbindungsleitung (12) eingespeiste Ozon eine Temperatur von unter 10°C, bevorzugt unter 0°C aufweist.

7. Produktionsanlage zum Herstellen von Salpetersäure,
mit einer Ammoniakverbrennungsanlage (2) zum Umsetzen von Ammoniak mit Sauerstoff zu Stickoxiden und Wasserdampf,
mit einem mit der Ammoniakverbrennungsanlage (2) verbundenen Kondensator (3) zum Abkühlen der Reaktionsprodukte aus der Ammoniakverbrennungsanlage (2) auf eine Temperatur, bei der mindestens ein Teil der Reaktionsprodukte kondensiert,
mit einem stromab zum Kondensator (3) angeordneten ersten Absorptionsturm (4, 5) zum Waschen des im Kondensator (3) entstehenden Gasgemisches mit Wasser oder einer wässerigen Salpetersäurelösung,
mit wenigstens einer aus dem Kondensator (3) zum ersten Absorptionsturm (4) führenden, mit einer Fördereinrichtung (13) ausgerüsteten Verbindungsleitung (12) zum Einleiten einer Salpetersäure enthaltenden Lösung in den ersten Absorptionsturm (4),
und mit einer den ersten Absorptionsturm (4) mit einer Bleichkolonne (6) verbindenden (14),
**dadurch gekennzeichnet,**
**dass** die zwischen Kondensator (3) und erstem Absorptionsturm (4) verlaufende Verbindungsleitung (12) über eine Ozonzuleitung (30) mit einer Quelle (29) für Ozon strömungsverbunden ist.

8. Produktionsanlage nach Anspruch 7, **dadurch gekennzeichnet, dass** die Verbindungsleitung (12) mit einer Bypassleitung (31) ausgerüstet ist, in die die Ozonzuleitung (30) einmündet.

9. Produktionsanlage nach einem der Ansprüche 7 oder 8, **dadurch gekennzeichnet, dass** in der Verbindungsleitung (12) und/oder der Bypassleitung (31) Mittel (32) zum Verdichten der Salpetersäure enthaltenden Lösung zumindest im Bereich der Einmündung der Ozonzuleitung (30) vorgesehen sind.

10. Produktionsanlage nach einem der Ansprüche 7 bis 9, dass eine vom Sumpf des ersten Absorptionsturms (4) in einen höheren Bereich des ersten Absorptionsturms (4) und/oder in eine Bleichkolonne (6) führende Leitung (14) vorgesehen ist, in die eine mit einer Quelle (35) für Ozon und/oder einer Quelle (24) für Sauerstoff strömungsverbundene Zuleitung (27) einmündet.

11. Produktionsanlage nach einem der Ansprüche 7 bis 10, **dadurch gekennzeichnet, dass** dem ersten Absorptionsturm (4) wenigstens ein zweiter Absorptionsturm (5) nachgeschaltet ist, der über eine vom Boden des zweiten Absorptionsturms (5) zum Kopfraum des ersten Absorptionsturms (4) führende, Steigleitung (21) mit diesem verbunden ist, wobei in die Steigleitung (21) eine mit einer Quelle (35) für Ozon und/oder einer Quelle (24) für Sauerstoff strömungsverbundene Zuleitung (27) einmündet.

## Claims

1. Process for preparing nitric acid, in which
a. ammonia is reacted with oxygen to give nitrogen oxides and steam in an ammonia combustion plant (2),
b. the nitrogen oxides and the steam from step (a.) are cooled in a condenser (3) to a temperature at which at least some of the steam condenses, with the nitrogen oxides in part reacting with the condensed steam and oxygen to give an aqueous, nitric acid-containing solution and in part remaining in a nitrogen oxide-containing gas mixture,
c. the nitric acid-containing solution from step (b.) is supplied from the condenser (3) via a connection conduit (12) to a first absorption tower (4),
d. the nitrogen oxide-containing gas mixture from step (b.) is supplied to the first absorption tower (4), in which it is brought into contact with water or with an aqueous solution, with the nitrogen oxide-containing gas mixture reacting with water at least in part to form an aqueous, nitric acid-containing solution which, together with the nitric acid-containing solution from step (c.), accumulates at the base of the first absorption tower (4),
**characterized in that**
e. ozone is introduced into the nitric acid-containing solution from step (b.) conducted through the connection conduit (12) between condenser (3) and first absorption tower (4) prior to the supply thereof to the first absorption tower (4).

2. Process according to the preceding claim, **characterized in that** the nitrogen oxide-containing gas mixture, after having passed through the first absorption tower (4), is supplied to a second absorption tower (5) in which it is brought into contact with water or with an aqueous nitric acid-containing solution nitric acid solution, with the nitrogen oxide-containing gas mixture reacting at least in part to form a nitric acid-containing solution which accumulates at the base of the second absorption tower (5) and from there is supplied to an upper region of the first absorption tower (4) via a riser conduit (21), wherein ozone and/or oxygen is introduced into the nitric acid-containing solution conducted through the riser conduit (21).

3. Process according to either of the preceding claims, **characterized in that** nitric acid-containing solution is discharged from the base of the first absorption tower (4) and supplied via a conveying conduit (14) to an upper region of the first absorption tower (4) and/or to a bleaching column (6), wherein ozone and/or oxygen is introduced into the nitric acid-containing solution conducted through the connection conduit (14).

4. Process according to any of the preceding claims, **characterized in that** the connection conduit (12) is in the form of a riser conduit and the ozone and/or the oxygen is introduced downstream of a conveying device (13) arranged in the connection conduit (12), in a geodetically lower region of the respective conduit (12).

5. Process according to any of the preceding claims, **characterized in that** a substream is branched off from the nitric acid-containing solution conducted through the riser conduit (12, 14, 21), is compressed and is enriched with ozone and/or oxygen before being supplied to the absorption tower (4) or the bleaching column (6).

6. Process according to any of the preceding claims, **characterized in that** the ozone injected into the nitric acid-containing solution in the connection conduit (12) has a temperature of below 10°C, preferably below 0°C.

7. Production plant for preparing nitric acid,
comprising an ammonia combustion plant (2) for reacting ammonia with oxygen to give nitrogen oxides and steam,
comprising a condenser (3) connected to the ammonia combustion plant (2) for cooling the reaction products from the ammonia combustion plant (2) to a temperature at which at least some of the reaction products condense, comprising a first absorption tower (4, 5) arranged downstream of the condenser (3) for scrubbing the gas mixture formed in the condenser (3) with water or with an aqueous nitric acid solution,
comprising at least one connection conduit (12), leading from the condenser (3) to the first absorption tower (4) and equipped with a conveying device (13), for introducing a nitric acid-containing solution into the first absorption tower (4),
and comprising a conveying conduit (14) connecting the first absorption tower (4) to a bleaching column (6),
**characterized**
**in that** the connection conduit (12) running between condenser (3) and first absorption tower (4) is connected in terms of flow via an ozone supply conduit (30) to a source (29) for ozone.

8. Production plant according to Claim 7, **characterized in that** the connection conduit (12) is equipped with a bypass conduit (31) into which the ozone supply conduit (30) opens.

9. Production plant according to either of Claims 7 and 8, **characterized in that** means (32) for compressing the nitric acid-containing solution are provided in the connection conduit (12) and/or the bypass conduit (31) at least in the region of the mouth of the ozone supply conduit (30).

10. Production plant according to any of Claims 7 to 9, **characterized in that** a conduit (14) is provided, which leads from the bottom of the first absorption tower (4) into a higher region of the first absorption tower (4) and/or into a bleaching column (6) and into which opens a supply conduit (27) that is connected in terms of flow to a source (35) for ozone and/or a source (24) for oxygen.

11. Production plant according to any of Claims 7 to 10, **characterized in that** at least one second absorption tower (5) is connected downstream of the first absorption tower (4) and is connected to same via a riser conduit (21) leading from the base of the second absorption tower (5) to the headspace of the first absorption tower (4), wherein a supply conduit (27) that is connected in terms of flow to a source (35) for ozone and/or a source (24) for oxygen opens into the riser conduit (21).

## Revendications

1. Procédé de fabrication d'acide nitrique, dans lequel
a. dans une installation de combustion d'ammoniac (2), de l'ammoniac est transformé avec de l'oxygène en oxydes d'azote et en vapeur d'eau,
b. les oxydes d'azote et la vapeur d'eau issus de l'étape (a.) sont refroidis dans un condenseur (3) à une température à laquelle au moins une partie de la vapeur d'eau se condense, les oxydes d'azote réagissant en partie avec la vapeur d'eau condensée et l'oxygène pour former une solution aqueuse contenant de l'acide nitrique et restant en partie dans un mélange gazeux contenant des oxydes d'azote,
c. la solution contenant de l'acide nitrique issue de l'étape (b.) est acheminée du condenseur (3) vers une première tour d'absorption (4) via une conduite de liaison (12),
d. le mélange gazeux contenant des oxydes d'azote issu de l'étape (b.) est acheminé vers la première tour d'absorption (4), dans laquelle il est mis en contact avec de l'eau ou une solution aqueuse, le mélange gazeux contenant des oxydes d'azote réagissant au moins partiellement avec l'eau pour former une solution aqueuse contenant de l'acide nitrique qui s'accumule, conjointement avec la solution contenant de l'acide nitrique issue de l'étape (c.), au fond de la première tour d'absorption (4),
**caractérisé en ce que**
e. de l'ozone est introduit dans la solution contenant de l'acide nitrique issue de l'étape (b.) acheminée par la conduite de liaison (12) entre le condensateur (3) et la première tour d'absorption (4) avant son acheminement vers la première tour d'absorption (4).

2. Procédé selon l'une quelconque des revendications précédentes, **caractérisé en ce que** le mélange gazeux contenant des oxydes d'azote, après avoir traversé la première tour d'absorption (4), est acheminé vers une deuxième tour d'absorption (5) dans laquelle il est mis en contact avec de l'eau ou une solution aqueuse contenant de l'acide nitrique solution d'acide nitrique, le mélange gazeux contenant des oxydes d'azote réagissant au moins partiellement pour former une solution contenant de l'acide nitrique qui s'accumule au fond de la deuxième tour d'absorption (5) et est acheminée de là vers une zone supérieure de la première tour d'absorption (4) via une conduite ascendante (21), de l'ozone et/ou de l'oxygène étant introduits dans la solution contenant de l'acide nitrique acheminée par la conduite ascendante (21).

3. Procédé selon l'une des revendications précédentes, **caractérisé en ce que** la solution contenant de l'acide nitrique est évacuée du fond de la première tour d'absorption (4) et acheminée via une conduite de transport (14) vers une zone supérieure de la première tour d'absorption (4) et/ou vers une colonne de blanchiment (6), de l'ozone et/ou de l'oxygène étant introduits dans la solution contenant de l'acide nitrique acheminée par la conduite de liaison (14).

4. Procédé selon l'une quelconque des revendications précédentes, **caractérisé en ce que** la conduite de liaison (12) est réalisée sous forme de conduite ascendante et l'introduction de l'ozone et/ou de l'oxygène s'effectue en aval d'un dispositif de transport (13) agencé dans la conduite de liaison (12), dans une zone géodésiquement inférieure de la conduite respective (12).

5. Procédé selon l'une quelconque des revendications précédentes, **caractérisé en ce qu'**un courant partiel de la solution contenant de l'acide nitrique acheminée par la conduite ascendante (12, 14, 21) est dérivé, comprimé et enrichi en ozone et/ou en oxygène avant son acheminement vers la tour d'absorption (4) ou la colonne de blanchiment (6).

6. Procédé selon l'une quelconque des revendications précédentes, **caractérisé en ce que** l'ozone introduit dans la solution contenant de l'acide nitrique dans la conduite de liaison (12) présente une température inférieure à 10 °C, de préférence inférieure à 0 °C.

7. Installation de production pour la fabrication d'acide nitrique,
avec une installation de combustion d'ammoniac (2) pour transformer de l'ammoniac avec de l'oxygène en oxydes d'azote et en vapeur d'eau,
avec un condenseur (3) relié à l'installation de combustion d'ammoniac (2) pour refroidir les produits de réaction issus de l'installation de combustion d'ammoniac (2) à une température à laquelle au moins une partie des produits de réaction se condense,
avec une première tour d'absorption (4, 5) agencée en aval du condenseur (3) pour laver le mélange gazeux produit dans le condenseur (3) avec de l'eau ou une solution aqueuse d'acide nitrique,
avec au moins une conduite de liaison (12) équipée d'un dispositif de transport (13) menant du condensateur (3) à la première tour d'absorption (4) pour introduire une solution contenant de l'acide nitrique dans la première tour d'absorption (4),
et avec une conduite de transport (14) reliant la première tour d'absorption (4) à une colonne de blanchiment (6),
**caractérisée**
**en ce que** la conduite de liaison (12) s'étendant entre le condensateur (3) et la première tour d'absorption (4) est reliée en écoulement via une conduite d'alimentation en ozone (30) à une source (29) d'ozone.

8. Installation de production selon la revendication 7, **caractérisée en ce que** la conduite de liaison (12) est équipée d'une conduite de dérivation (31) dans laquelle débouche la conduite d'alimentation en ozone (30).

9. Installation de production selon l'une quelconque des revendications 7 ou 8, **caractérisée en ce que** des moyens (32) destinés à comprimer la solution contenant de l'acide nitrique sont prévus dans la conduite de liaison (12) et/ou la conduite de dérivation (31), au moins dans la zone de l'embouchure de la conduite d'alimentation en ozone (30).

10. Installation de production selon l'une quelconque des revendications 7 à 9, dans laquelle il est prévu une conduite (14) menant du fond de la première tour d'absorption (4) à une zone supérieure de la première tour d'absorption (4) et/ou dans une colonne de blanchiment (6), dans laquelle débouche une conduite d'alimentation (27) reliée en écoulement à une source (35) d'ozone et/ou à une source (24) d'oxygène.

11. Installation de production selon l'une quelconque des revendications 7 à 10, **caractérisée en ce qu'**au moins une deuxième tour d'absorption (5) est montée en aval de la première tour d'absorption (4), laquelle est reliée via une colonne ascendante (21) menant du fond de la deuxième tour d'absorption (5) à l'espace de tête de la première tour d'absorption (4) à celle-ci, et une conduite d'alimentation (27) reliée en écoulement à une source (35) d'ozone et/ou à une source (24) d'oxygène débouchant dans la conduite ascendante (21).
